# EUROPEAN PATENT SPECIFICATION

(11) **EP 2 048 174 B1**
(45) Date of publication and mention of the grant of the patent: **08.10.2014**
(21) Application number: 07791873.8
(22) Date of filing: 02.08.2007
(51) Int. Cl.: H01B 3/20

(54) **INSULATING POLYMER MATERIAL COMPOSITION**
ISOLIERENDE POLYMERMATERIALZUSAMMENSETZUNG
COMPOSITION DE MATÉRIAU POLYMÈRE ISOLANT

(30) Priority: 02.08.2006 JP 2006210845
(43) Date of publication of application: 15.04.2009
(73) Proprietor: Meidensha Corporation, Tokyo 141-0032 (JP)
(72) Inventor: KURATA, Yasuyuki c/o MEIDENSHA CORPORATION, Tokyo 141-0032 (JP)
(74) Representative: Manitz, Finsterwald & Partner GbR
(86) International application number: PCT/JP2007/065199
(87) International publication number: WO 2008/016120

(56) References cited:
- DD-A1- 133 054
- JP-A- 04 306 221
- JP-A- 08 508 533
- JP-A- 49 025 500
- JP-A- 2001 119 129
- JP-A- 2004 331 804
- JP-A- 2006 241 331
- JP-A- 2007 031 498
- JP-A- 2007 035 337
- US-A- 5 095 050
- US-A- 6 159 913
- US-A1- 2004 192 859
- DATABASE CHEMABS CHEMICAL ABSTRACTS SERVICE, COLUMBUS, OHIO, US; 1984, YOSHIDA, ICHIRO E.A.: "Unsaturated epoxy ester resin for injection molding" XP002572804
- DATABASE WPI Week 198612 Thomson Scientific, London, GB; AN 1986-079125 XP002572805 & JP 61 028520 A (NIPPON OILS & FATS CO LTD) 8 February 1986 (1986-02-08)
- CHANG K. HONG, E.A.: "Development of a bio-based composite material from soybean oil and keratin fibers." JOURNAL OF APPLIED POLYMER SCIENCE, vol. 95, no. 6, 2005, pages 1524-1538, XP002572803

## Description

### BACKGROUND OF THE INVENTION

The present invention relates to an insulating polymer material composition applied to, for example, an insulating structure for a high-voltage device comprising a switching device such as a circuit breaker or disconnector in the casing.

As a material applied (for example, in such a manner as to be exposed directly to the outdoors) to an insulating structure (e.g. a portion which needs the insulating property) for a voltage device (such as a high-voltage device) comprising a switching device such as a circuit breaker or disconnector in the casing, a composition obtained by curing a polymer material containing a petroleum-derived thermosetting resin (i.e. a resin using petroleum as a starting material, such as epoxy resins or the like) as a main component, for example, a product (i.e. a molded product hereinafter referred to as a polymer product) comprising a composition formed by molding the polymer material have been conventionally and widely known.

With sophistication and concentration of society, the high-voltage device and the like have been strongly desired, for example, to be reduced in size and grown in capacity while ensuring great reliability (e.g. mechanical properties such as dielectric properties under electric field, and electrical properties). With this, the polymer product also has been required to improve in various properties.

In general, examples of a main component of the polymer material used in conventionally known polymer products are: epoxy resins of heat resistant type having a glass transition temperature (hereinafter referred to as "Tg") of not lower than 100 °C; bisphenol-A-type epoxy resins relatively high in mechanical properties (such as the strength); and the like. However, in consideration of disposal of the polymer product (for example, disposal due to lifespan or breakdown), a polymer product formed of a biodegradable polymer material has undergone development as discussed in Patent Document 1.

As a result of having tried in various technical fields (e.g. in Patent Document 2) to apply (for example, to a printed-circuit board) a composition formed by curing a plant-derived polymer material, there became known that sufficient mechanical properties can be obtained e.g. when the product is used in room temperature atmosphere. However, this composition is formed by using aldehydes as a curing agent, and therefore it had not been applied to the high-voltage device since it is poor in mechanical properties in a high temperature atmosphere.

The above-discussed polymer product in which the heat resistant epoxy resins having a glass transition temperature (hereinafter referred to as "Tg") of not lower than 100 °C are used as the main component of the polymer material is rigid and fragile, and additionally raises a fear that cracks are easily formed when the polymer product is used in an environment where temperature changes frequently. In view of this, there had been made some attempts, for example, to use solid epoxy resins (e.g. those in which a result of a crack resistance test using a metal conductor is not higher than -30 °C) as the main component of the polymer material or to improve a crack resistance and the like by adding a large quantity of filler to the polymer material; however, such a polymer product is significantly increased in viscosity, and therefore there is a fear that a pot life (the shortest possible time for an industrial operation) cannot be sufficiently ensured thereby reducing the workability, e.g. in a molding operation.

Though the above-discussed bisphenol-A-type epoxy resins are widely used as industrial products since they are high in mechanical properties, bisphenol A in itself is regarded as a deleterious endocrine disruptor and therefore it became concerned from the environmental point. Though there is a report that a cured composition such as the polymer product is not deleterious since bisphenol A is hard to leak out therefrom, bisphenol A is deleterious even in a very small quantity (for example, even at a ppm level or more smaller amount) and may leak into the air when unreacted bisphenol A (a low molecular-weight component) exists in the composition, which raises concern.

In a limited environment, for example, in a process for synthesizing bisphenol-A-type epoxy resins and various additives or a process for molding a polymer material obtained by the synthesizing process at a polymer product production facility, there is a fear that the environment is in an atmosphere of a high concentration of bisphenol A. Further, this raises a fear of a production cost increase, since ventilation equipment (i.e. equipment for cleaning air in the work environment) is required in each of the above-discussed processes even if each of the above-discussed production processes is carried out completely without humans in attendance (or even if production lines for the polymer product are made unattended) or since ventilation equipment which had been out of assumption in conventional techniques becomes needed.

In disposal of the polymer product (e.g. disposal due to lifespan or breakdown), various disposal methods can be employed; however, every one of the methods has problems as discussed below.

For example, if an incineration treatment method is applied to the polymer product formed of the polymer material containing the petroleum-derived substance (such as epoxy resins) as the main component, various deleterious substances and carbon dioxide are emitted in large quantity thereby causing some issues such as environmental pollution and global warming, which had been the feared point. In addition, though a mere landfill method may be applied to the above-discussed polymer product, a final disposal field ensured for the landfill method is decreasing tendency through the years. The Ministry of Health and Welfare made a trial calculation of the remaining time to determine it to be about the year 2008. Then, the Economic Planning Agency gives an assumption, based on the trial calculation provided by the Ministry of Health and Welfare, that the waste-disposal cost will rocket up around 2008 thereby depressing the economic growth rate.

Additionally, though an attempt to recall and reuse (recycle) the above-discussed polymer product is also carried out, such a recycling method is not established and therefore hardly carried out. By way of exception, components relatively equal in quality (PE cable-coating members used in the polymer product) are recalled to be used as thermal energy; however, thermal energy requires a combustion treatment process so as to sometimes cause the issues of environmental pollution, global warming and the like.

However, there is a fear also in the case where the polymer product is formed of the biodegradable polymer material, the fear being that the polymer product is melted when used in an atmosphere, for example, at temperature of not lower than 100 °C. Further, in the case where the polymer product is formed of a crosslinking composition of biological origin and uses aldehydes as the curing agent, sufficient mechanical properties may be not obtained in a high temperature atmosphere (e.g. in the work environment for high-voltage devices or the like), though obtained in an atmosphere of about room temperature (e.g. in an environment for the printed-circuit board in terms of temperature).

US 2004/0192859 A1 discloses a composition comprising i) a ricinoleic acid component selected from the group consisting of castor oil, ricinoleic acid, castor oil estolide, ricinoleic acid estolide and combinations thereof, ii) an epoxy group-containing compound selected from the group consisting of epoxy resins, epoxidized vegetable oils, such as epoxidized soya bean oil, and combinations thereof, iii) a crosslinker, such as a polycarboxylic acid like sebacic acid, and iv) optionally a crosslinking catalyst, such as a peroxide.

JP 47-031,433 B relates to a polymeric material for injection molding which is prepared by a two-step procedure. While in the first step a mixture of an epoxy resin based on bisphenol A and epichlorohydrin, methacrylic acid, 1,2,3,6-tetrahydro-3,6-endo-methylenephthalic anhydride, Me2(PhCH2)N and 0.3 g hydroquinone is reacted and then mixed with styrene, in the second step a small part of the product obtained in the first step is reacted with poly(vinyl methyl ether), epoxidized soybean oil, methyl ethyl ketone peroxide and cobalt naphthenate.

In view of the above, it is required to improve various problems relating to the disposal of such polymer products while keeping their properties (such as the mechanical properties and the electrical properties) excellent.
Patent Document 1: Japanese Patent Provisional Publication No. 2002-358829
Patent Document 2: Japanese Patent Provisional Publication No. 2002-053699

### SUMMARY OF THE INVENTION

It is, therefore, an object of the present invention to provide an insulating polymer material composition environmentally excellent and having a sufficient biodegradability, while imparting good mechanical and electrical properties to a polymer product such as the high-voltage device without reducing the workability.

An aspect of the present invention resides in an insulating polymer material composition applied to an insulating structure for a voltage device. The insulating polymer comprises a kneaded substance obtained by adding an acid anhydride and an organic peroxide to an epoxidized soybean oil and then by kneading it, in which the kneaded substance is three-dimensionally crosslinked by a heat treatment.

>

A further aspect of the present invention resides in the above-discussed insulating polymer material composition in which an added amount of the organic peroxide is from 0.5 to 16.0 phr.

A still further aspect of the present invention resides in the above-discussed insulating polymer material composition in which the organic peroxide is one of dicumyl peroxide, 2,5-dimethyl-2,5-di(*t*-butylperoxy)hexane, 2,5-dimethyl-2,5-di(*t*-butylperoxy)hexane-3, 1-(2- t-butylperoxyisopropyl)-4-isopropylbenzene and 1-(2- t-butylperoxyisopropyl)-3-isopropylbenzene.

According to the above aspects, it is allowed to obtain high volume resistivity (or insulating property) and dielectric properties under electric field even if the filler is not used in such large quantity as to be used in conventional polymer products (for example, good dielectric properties under electric field and an equal volume resistivity, as compared with the polymer material composition formed of a conventional bisphenol-A-type epoxy resin, are obtained).

Further, the above-discussed insulating polymer material composition generates neither deleterious substances nor carbon dioxide even if incinerated, and additionally is sufficiently biodegradable when landfilled in soil.

### DETAILED DESCRIPTION OF THE INVENTION

Hereinafter, an embodiment of an insulating polymer material composition according to the present invention will be discussed in detail.

In this embodiment, a polymer material (i.e. a polymer material formed of a natural material as a base material or a starting material) naturally originated and capable of three-dimensionally crosslinking is used in place of a petroleum-derived polymer material such as epoxy resins, in an insulating polymer material composition applied to a portion of a polymer product requiring the insulating property.

More specifically, it is noted that the polymer material as discussed above can be applied to a high-voltage device without reducing the workability while sufficiently ensuring excellent electrical and mechanical properties, and that, since the polymer material in itself is neutral toward carbon, a composition (e.g. a polymer product) formed of the polymer material is able to prevent or suppress the emission of deleterious substances (such as endocrine disruptor) and carbon dioxide and the like even if incinerated. For example, the composition formed of the polymer material as discussed above can be biodegraded when landfilled in soil. The naturally originated polymer material is known to be applied to a printed-circuit board; however, it has never been applied to the high-voltage device.

Concrete examples of the polymer material naturally originated and capable of three-dimensionally crosslinking as discussed above are those using an epoxidized soybean oil. The epoxidized soybean oil has been widely used, for example, as a stabilizer for vinyl chloride resins, as well as an epoxidized linseed oil; however, it has never been applied to and never been studied as the polymer product for the high-voltage device since it is low in Tg property and mechanical properties and poorer in reactivity than common industrial epoxy resins so as to need a long time for being cured.

It is found from the present embodiment that, when the insulating polymer material composition to be formed by curing the epoxidized soybean oil is cured by the use of acid anhydrides (or by adding the acid anhydrides to the epoxidized soybean oil), the Tg property and the insulating property of the insulating polymer material composition can be improved while obtaining properties (e.g. good dielectric properties under electric field) more excellent than those of common epoxy resin products.

The above-mentioned acid anhydrides are added in a stoichiometric amount based on an epoxy equivalent weight determined, for example, from an oxirane concentration in the epoxidized soybean oil. Additionally, peroxide vulcanization may be carried out by using organic peroxides (or crosslinking agents) as an initiator (or a curing accelerator) for curing of the acid anhydrides Examples of the organic peroxides are: dicumyl peroxide (hereinafter referred to as "a crosslinking agent A"); 2,5-dimethyl-2,5-di(*t*-butylperoxy)hexane (hereinafter referred to as "a crosslinking agent B"); 2,5-dimethyl-2,5-di(*t*-butylperoxy)hexane-3 (hereinafter referred to as "a crosslinking agent C"); 1-(2-*t*-butylperoxyisopropyl)-4-isopropylbenzene (hereinafter referred to as "a crosslinking agent D"); and 1-(2-*t-*butylperoxylsopropyl)-3-isopropylbenzene (hereinafter referred to as "a crosslinking agent E"). In addition to these, organic peroxides that have "-O-O-" in their molecular structures can be suitably employed.

In the present embodiment, various additives other than the epoxidized soybean oil, the acid anhydrides, the organic peroxides can be suitably used for the purpose of improving, for example, the workability (e.g. shortening of operation time), the formability, the Tg property, the mechanical and physical properties, the electrical properties and the like. A concurrent use of a reaction adjuvant may be allowed for the purpose of suppressing a reaction in the organic peroxides. Whether or not the reaction adjuvant is used does not exert an influence upon the crosslinking structure, since crosslinks in the insulating polymer material composition are made basically by the organic peroxides.

Further, an added amount of the organic peroxides and conditions (such as temperature and time) for heat treatment carried out after kneading can be suitably adjusted in accordance with the kind of the organic peroxides. Reaction temperature ranges of the organic peroxides are specifically defined, and therefore it is allowed to impart objective physical properties (or to suppress the physical properties of the insulating polymer material composition), for example, when using two or more kinds of organic peroxides and when changing the kneading conditions and the heat treatment conditions step by step. Incidentally, in Examples as will be discussed below, the heat treatment conditions were set at a temperature of 170°C and 1 hour from the viewpoint of verification of the effectiveness of the organic peroxides.

### EXAMPLES

The insulating polymer material composition of the present embodiment will be more readily understood with reference to the following Examples. In the present examples, first of all, an acid anhydride (available from Hitachi Chemical Co., Ltd. under the trade name of HN2200R) as a curing agent was added to an epoxidized soybean oil in a stoichiometric amount while adding any one of the crosslinking agents A to E thereto as a curing accelerator in an amount ranging from 0.2 to 20.0 phr as will be shown below in Table 1. Upon kneading it (on a condition according to the added amount), a heat treatment was carried out on the kneaded substance at 170°C for 1 hour to make peroxide vulcanization thereof, thereby obtaining three-dimensionally crosslinked insulating polymer material composition specimens A1 to A6, B1 to B6, C1 to C6, D1 to D6 and E1 to E6.

On the other hand, an acid anhydride and the like (the same as that used in the specimens A1 to E6) respectively serving as the curing agent and the curing accelerator were added to a bisphenol-A-type epoxy resin (available from Vantico Ltd. under the trade name of CT200A) in a certain amount. Upon kneading it (on a condition according to the added amount), a heat treatment was carried out on the kneaded substance at 120 °C for 16 hours to make peroxide vulcanization thereof, thereby obtaining a three-dimensionally crosslinked insulating polymer material composition specimen P as a Comparative Example against the above-discussed specimens A1 to E6.

Thereafter, each of the specimens A1 to E6 and P was measured according to JIS-K 6911 in terms of: the volume resistivity as an electrical property (the insulating property); and "the dielectric strength" (dielectric field (AC) according to the short time method) within a temperature range of from 0 to 100 °C, as the dielectric properties under electric field. The thus obtained results are shown in the following Table 1.

**[Table 1]**

| | Specimen A1 | Specimen A2 | Specimen A3 | Specimen A4 | Specimen A5 | Specimen A6 |
|---|---|---|---|---|---|---|
| Polymer material | Epoxidized soybean oil | | | | | |
| Curing agent | Acid anhydride | | | | | |
| Added amount of crosslinking agent A (phr) | 0.2 | 0.5 | 4.0 | 8.0 | 16.0 | 20.0 |
| Heat treatment condition | 170°C, 1 hour | | | | | |
| Volume resistivity (Ω · cm) | Higher than 1.0 × 10¹⁵ | | | | | |
| 0°C Dielectrical strength (kV/mm) | 12 | 18 | 20 | 20 | 21 | - |
| 90°C Dielectrical strength (kV/mm) | 6 | 8 | 10 | 11 | 11 | - |
| | | | | | | |

| | Specimen B1 | Specimen B2 | Specimen B3 | Specimen B4 | Specimen B5 | Specimen B6 |
|---|---|---|---|---|---|---|
| Polymer material | Epoxidized soybean oil | | | | | |
| Curing agent | Acid anhydride | | | | | |
| Added amount of crosslinking agent B (phr) | 0.2 | 0.5 | 4.0 | 8.0 | 16.0 | 20.0 |
| Heat treatment condition | 170°C, 1hour | | | | | |
| Volume resistivity (Ω·cm) | Higher than 1.0 × 10¹⁵ | | | | | |
| 0°C Dielectrical strength (kV/mm) | 11 | 16 | 21 | 20 | 21 | - |
| 90°C Dielectrical strength (kV/mm) | 5 | 10 | 11 | 12 | 11 | - |
| | | | | | | |

| | Specimen C1 | Specimen C2 | Specimen C3 | Specimen C4 | Specimen C5 | Specimen C6 |
|---|---|---|---|---|---|---|
| Polymer material | Epoxidized soybean oil | | | | | |
| Curing agent | Acid anhydride | | | | | |
| Added amount of crosslinking agent C (phr) | 0.2 | 0.5 | 4.0 | 8.0 | 16.0 | 20.0 |
| Heat treatment condition | 170°C, 1hour | | | | | |
| Volume resistivity (Ω · cm) | Higher than 1.0 × 10¹⁵ | | | | | |
| 0°C Dielectrical strength (kV/mm) | 12 | 17 | 20 | 22 | 21 | - |
| 90°C Dielectrical strength (kV/mm) | 7 | 8 | 10 | 9 | 9 | - |

| | Specimen D1 | Specimen D2 | Specimen D3 | Specimen D4 | Specimen D5 | Specimen D6 |
|---|---|---|---|---|---|---|
| Polymer material | Epoxidized soybean oil | | | | | |
| Curing agent | Acid anhydride | | | | | |
| Added amount of crosslinking agent D (phr) | 0.2 | 0.5 | 4.0 | 8.0 | 16.0 | 20.0 |
| Heat treatment condition | 170°C, 1 hour | | | | | |
| Volume resistivity (Ω · cm) | Higher than 1.0 × 10¹⁵ | | | | | |
| 0°C Dielectrical strength (kV/mm) | 11 | 16 | 17 | 20 | 19 | - |
| 90°C Dielectrical strength (kV/mm) | 4 | 8 | 8 | 10 | 9 | - |
| | | | | | | |

| | Specimen E1 | Specimen E2 | Specimen E3 | Specimen E4 | Specimen E5 | Specimen E6 |
|---|---|---|---|---|---|---|
| Polymer material | Epoxidized soybean oil | | | | | |
| Curing agent | Acid anhydride | | | | | |
| Added amount of crosslinking agent E (phr) | 0.2 | 0.5 | 4.0 | 8.0 | 16.0 | 20.0 |
| Heat treatment condition | 170°C, 1 hour | | | | | |
| Volume resistivity (Ω · cm) | Higher than 1.0 × 10¹⁵ | | | | | |
| 0°C Dielectrical strength (kV/mm) | 11 | 19 | 21 | 20 | 21 | - |
| 90°C Dielectrical strength (kV/mm) | 5 | 8 | 10 | 11 | 11 | - |
| | | | | | | |

| | Specimen P | | | | | |
|---|---|---|---|---|---|---|
| Polymer material | Bisphenol-A-type epoxy resin | | | | | |
| Curing agent | Acid anhydride | | | | | |
| Heat treatment condition | 120°C. 16 hours | | | | | |
| Volume resistivity (Ω · cm) | Higher than 1.0 × 10¹⁵ | | | | | |
| 0°C Dielectrical strength (kV/mm) | 16 | | | | | |
| 90°C Dielectrical strength (kV/mm) | 8 | | | | | |

| | | | | | | |
|---|---|---|---|---|---|---|
| A symbol "-" means that measurement was not accomplished because of foaming | | | | | | |

It is found, from the results as shown in Table 1, that the specimens A6, B6, C6, D6 and E6 in which the added amount of the acid anhydride was 20.0 phr had a volume resistivity equal to that of the specimen P formed of the bisphenol-A-type epoxy resin. However, the measurement of the dielectric strength was not accomplished since each of the specimens A6, B6, C6, D6 and E6 in itself caused foaming. Further, the specimens A1, B1, C1, D1 and E1 in which the added amount of the acid anhydride was 0.2 phr had a volume resistivity equal to that of the specimen P. Additionally, the dielectric strength of each of the specimens A1, B1, C1, D1 and E1 was measured but found to be lower than that of the specimen P.

Meanwhile, the specimens A2 to A5, B2 to B5, C2 to C5, D2 to D5 and E2 to E5 in which the added amount of the acid anhydride was 0.5 to 16.0 phr had a volume resistivity equal to that of the specimen P and an dielectric strength higher than that of the specimen P.

As discussed above, the insulating polymer material compositions of the specimens A2 to E5 were obtained: by adding the acid anhydride to the epoxidized soybean oil having biodegradability (in a stoichiometric amount) while adding the organic peroxide thereto in an amount ranging from 0.5 to 16.0 phr; by kneading it; and then by making peroxide vulcanization on the kneaded substance so as to three-dimensionally crosslink it. The thus obtained insulating polymer material compositions were found not to cause foaming thereof and to gain not only good dielectric properties under electric field but also sufficient electrical properties for the polymer product such as the high-voltage device.

According to the above-discussed embodiment of the present invention, the polymer product such as the high-voltage device can obtain excellent mechanical and electrical properties without reducing the workability (for example, with ensuring a sufficient pot life), and can exhibit a sufficient biodegradability so as to allow a contribution to global environmental protection.

Although the invention has been described in detail by reference to the above-described embodiments and examples, the invention is not limited to the embodiments and examples described above. Modifications and variations of the embodiments and examples described above will occur to those skilled in the art, in light of the above teachings.

More specifically, the kneading condition and the heat treatment condition applied to the kneaded substance obtained by adding the acid anhydride and the organic peroxide to the polymer material (or the epoxidized soybean oil) are suitably set in accordance with, for example, the kind or the added amount of the polymer material, the acid anhydride and the organic peroxide, and not limited to the contents of the present example. Furthermore, it is apparent that the same effects as shown by the present example can be brought about even in the case where various additives are suitably used in addition to the polymer material, the acid anhydride and the organic peroxide.

## Claims

1. An insulating polymer material composition applied to an insulating structure for a voltage device, comprising:
a kneaded substance obtained by adding an acid anhydride and an organic peroxide to an epoxidized soybean oil and then by kneading it,
wherein the kneaded substance is three-dimensionally crosslinked by a heat treatment.

2. An insulating polymer material composition as claimed in Claim 1, wherein an added amount of the organic peroxide is from 0.5 to 16.0 phr.

3. An insulating polymer material composition as claimed in Claim 1 or 2, wherein the organic peroxide is one of dicumyl peroxide, 2,5-dimethyl-2,5-di(*t*-butylperoxy)hexane, 2,5-dimethyl-2,5-di(*t*-butylperoxy)hexane-3, 1-(2-*t*-butylperoxylsopropyl)-4-isopropylbenzene and 1-(2-*t*-butylperoxyisopropyl)-3-isopropylbenzene.

## Patentansprüche

1. Isolierende Polymermaterialzusammensetzung, welche auf eine isolierende Struktur für eine Spannungseinrichtung aufgebracht wird, welche enthält:
eine geknetete Substanz, welche durch Zugabe eines Säureanhydrids und eines organischen Peroxids zu einem epoxidierten Sojaöl und dann durch Kneten derselben erhalten wird,
wobei die geknetete Substanz durch eine Wärmebehandlung dreidimensional vernetzt ist.

2. Isolierende Polymermaterialzusammensetzung nach Anspruch 1, wobei die Zugabemenge des organischen Peroxids zwischen 0,5 und 16 phr beträgt.

3. Isolierende Polymermaterialzusammensetzung nach Anspruch 1 oder 2, wobei das organische Peroxid eines von Dicomylperoxid , 2,5-Dimethyl-2,5-di(t-butylperoxy)hexan, 2,5-Dimethyl-2,5-di(t-butylperoxy)hexan-3, 1-(2-t-butylper-oxyisopropyl)-4-isopropylbenzol und 1-(2-t-butylperoxyisopropyl)-3-isopropylbenzol ist.

## Revendications

1. Composition de matériau polymère isolant appliquée à une structure isolante pour un dispositif de tension, comprenant
une substance pétrie obtenue en ajoutant un anhydride acide et un peroxyde organique à une huile de soja époxydée puis en la pétrissant,
dans lequel la substance pétrie est réticulée en trois dimensions par un traitement à la chaleur.

2. Composition de matériau polymère isolant selon la revendication 1, dans laquelle une quantité ajoutée du peroxyde organique est de 0,5 à 16,0 phr.

3. Composition de matériau polymère isolant selon la revendication 1 ou 2, dans laquelle le peroxyde organique est un parmi le peroxyde de dicumyle,
le 2,5-diméthyl-2,5-di(tertiobutylperoxy)hexane,
le 2,5-diméthyl=2,5-di(tertiobutylperoxy)hexane-3,
le 1-(2-tertiobutylperoxyisopropyl)-4-isopropylbenzène et
le 1-(2-tertiobutylperoxyisopropyl)-3-isopropylbenzène.
